# EUROPEAN PATENT APPLICATION

(11) **EP 0 782 971 A1**
(43) Date of publication of application: **09.07.1997**
(21) Application number: 96308868.7
(22) Date of filing: 06.12.1996
(51) Int. Cl.: C01G 23/053, C01G 23/08

(54) **Preparation of anatase titanium dioxide**

(30) Priority: 05.01.1996 GB 9600196
(71) Applicant: TIOXIDE GROUP SERVICES LIMITED, London W14 0QL (GB)
(72) Inventor: Metcalf, Alison Lesley, Yarm, Cleveland TS15 9TL (GB); Hards, John Eric, Hartlepool, Cleveland TS25 1DX (GB)
(74) Representative: Jackson, John Derek

(57) **Abstract**

A process for the preparation of anatase titanium dioxide comprises precipitating hydrous titanium oxide from an aqueous solution of a titanium sulphate by heating said aqueous solution in the presence of a nuclei suspension consisting of non-rutilising nuclei said nuclei suspension being prepared in the substantial absence of aluminium ions, and subsequently subjecting the hydrous titanium oxide formed to a calcination process in the presence of at least one potassium compound, at least one phosphorus compound and at least one aluminium compound. The potassium compound is present in an amount equivalent to between 0.1 and 0.7 per cent by weight potassium oxide calculated as K₂O with respect to TiO₂, the phosphorus compound is present in an amount equivalent to between 0.2 and 1.0 per cent by weight phosphorus oxide calculated as P₂O₅ with respect to TiO₂ and the aluminium compound is present in an amount equivalent to between 0.1 and 0.5 per cent by weight alumina calculated as Al₂O₃ with respect to TiO₂ and in the calcination process the hydrous titanium oxide is converted to anatase titanium dioxide by heating to a temperature of at least 1000°C. The anatase titanium dioxide formed has a large average crystal size in comparison to conventional anatase titanium dioxide.

## Description

This invention relates to the preparation of titanium dioxide and in particular to anatase titanium dioxide having a large crystal size.

The manufacture of titanium dioxide pigment by the so-called "sulphate process" has become well established producing two types of pigment, anatase titanium dioxide and the more valuable and technically important rutile titanium dioxide.

The pigmentary properties of rutile titanium dioxide make the pigment the preferred one but anatase does possess a higher degree of whiteness and brightness which are important in certain uses.

Consequently it would be advantageous if anatase titanium dioxide could be made with at least some improved pigmentary properties. In particular anatase titanium dioxide having a larger crystal size than is conventionally available is now recognised as desirable.

In the sulphate process a titaniferous ore is digested with concentrated sulphuric acid and the cake obtained is dissolved in weak acid or water to produce a solution of a titanium sulphate. This titanium sulphate is subsequently hydrolysed to precipitate hydrous titanium oxide either by the deliberate addition of nuclei ('Mecklenburg' process) or by inducing nuclei within the solution by the addition of water ('Blumenfeld') process.

A process for making large crystal anatase using added nuclei has recently been described in GB patent 2 247 009 in which a particular form of nuclei is utilised. The current invention provides an alternative method for the production of large crystal anatase.

According to the invention, a process for the preparation of anatase titanium dioxide comprises precipitating hydrous titanium oxide from an aqueous solution of a titanium sulphate by heating said aqueous solution in the presence of a nuclei suspension consisting of non-rutilising nuclei said nuclei suspension being prepared in the substantial absence of aluminium ions, separating the precipitated hydrous titanium oxide from the aqueous solution and subjecting said hydrous titanium oxide to a calcination process in the presence of at least one potassium compound, at least one phosphorus compound and at least one aluminium compound, the potassium compound being present in an amount equivalent to between 0.1 and 0.7 per cent by weight potassium oxide calculated as K₂O with respect to TiO₂, the phosphorus compound being present in an amount equivalent to between 0.2 and 1.0 per cent by weight phosphorus oxide calculated as P₂O₅ with respect to TiO₂ and the aluminium compound being present in an amount equivalent to between 0.1 and 0.5 per cent by weight alumina calculated as Al₂O₃ with respect to TiO₂ in which calcination process the hydrous titanium oxide is converted to anatase titanium dioxide by heating to a temperature of at least 1000°C.

This process has been found to produce anatase titanium dioxide with a larger average crystal size than anatase produced by conventional 'sulphate' processes for the production of titanium dioxide.

Any appropriate titaniferous ore can be used to form the solution of titanium sulphate, typical ores being ilmenite or slag. These ores are digested in concentrated sulphuric acid to produce a digestion cake which is then dissolved in water or dilute acid to produce a solution of titanium sulphate.

This solution containing iron sulphate, titanium sulphate and sulphuric acid together with other impurities is usually treated with a reducing agent and filtered prior to hydrolysis in accordance with this invention.

Typically, the solution of titanium sulphate has a concentration equivalent to between 100 and 250 grams per litre TiO 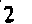 and the initially prepared solution is adjusted to this concentration, if necessary. Preferably, the concentration is in the range 150 to 220 grams per litre TiO 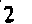 .

Usually, the titanium sulphate used has a composition such that the ratio of sulphate to titanium by weight is in the range 1.50 to 2.10. As is conventional in the titanium dioxide industry this ratio is expressed as a ratio of weight of H 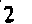 SO 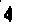 to weight of TiO 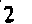 Preferably, this ratio is in the range 1.65 to 2.00 and, most preferably, in the range 1.75 to 1.95.

The titanium sulphate is converted to hydrous titanium oxide by heating in the presence of non-rutilising nuclei. Such nuclei are distinguishable from rutilising nuclei by the crystal form of titanium dioxide produced when the nuclei are utilised in a hydrolysis of titanium sulphate. In a suitable test, titanium sulphate solution is hydrolysed in the presence of 2 per cent nuclei by weight with respect to potential TiO₂ in the titanium sulphate solution. After filtration, the precipitated titanium dioxide is dried and calcined at 900°C for 2½ hours and its crystal form is determined by X-ray diffraction. Non-rutilising nuclei produce titanium dioxide principally in the anatase form. Typically, when this test is employed at least 90 per cent by weight of the titanium dioxide formed is in the anatase crystal form.

Alternative tests for characterising non-rutilising nuclei are available but are not necessarily conclusive. For example, the rutile crystal form is normally undetectable by x-ray diffraction on a powder prepared by drying a sample of non-rutilising nuclei. In addition, generally, when non-rutilising nuclei are heated to about 600°C, they are not converted to rutile titanium dioxide.

A typical process for preparing non-rutilising nuclei comprises the formation of an aqueous solution of titanium tetrachloride containing the equivalent of from 150 to 250 grams per litre TiO₂ and also containing sulphuric acid usually at a ratio of TiO₂:H₂SO₄ in the range 1.25:1 to 1.75:1. An aqueous solution of sodium hydroxide is then added to this aqueous titanium tetrachloride in order to precipitate the nuclei.

Several other methods of preparing nuclei for use in precipitating hydrous titanium oxide from a solution of titanium sulphate are known to the skilled person. Generally, any nuclei which meet the above-mentioned criteria for "non-rutilising nuclei" are suitable.

The size of nuclei of use in the precipitation of titanium dioxide can be extremely difficult to measure. However it is believed that one particular form of non-rutilising nuclei is approximately spherical with an average particle diameter in the range 2 nm to 8 nm.

The quantity of nuclei used in the process of the invention to precipitate hydrous titanium dioxide from the titanium sulphate solution depends upon a number of factors including the desired crystal size of the titanium dioxide finally produced. Amounts within the range 0.2 to 0.5 per cent by weight of TiO₂ in the nuclei with respect to titanium content of the titanium sulphate solution (expressed as TiO₂) are usually employed. Preferably, the amount is from 0.3 to 0.4 per cent by weight.

Hydrolysis of the titanium sulphate solution to produce hydrous titanium oxide is induced by heating the mixture of titanium sulphate and nuclei. Preferably, the temperature of the mixture is held between 80°C and 110°C and more preferably between 90°C and 110°C. Usually the mixture is held at a temperature between 90°C and 110°C for a period between 200 and 400 minutes typically for between 200 and 250 minutes.

The precipitated hydrous titanium dioxide is then separated from the residue of the titanium sulphate solution by any suitable means such as vacuum or pressure filtration. After filtration, the filter cake is normally washed with water and leached with small amounts of dilute sulphuric acid or other suitable reagents. Although it is desirable to reduce the amount of free sulphuric acid present compared to the hydrous titanium oxide immediately after separation, it is not essential that the acid is completely removed or neutralised. Usually, the hydrous titanium oxide contains, before calcination, from 2 to 15 per cent by weight free sulphuric acid with respect to weight of TiO₂. After separation and washing, the damp filter cake typically contains between 40 and 55 per cent TiO 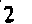 by weight.

This filter cake is then dried during the subsequent calcination process.

The calcination takes place in the presence of at least one potassium compound, at least one phosphorus compound and at least one aluminium compound. When necessary, these compounds are added in any convenient form but are typically added to the damp filter cake or as a feed to the calciner as a concentrated solution.

The amount of potassium compound used is between 0.1 and 0.7 per cent by weight calculated as K 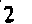 O with respect to TiO 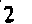 . Preferably, the amount is from 0.25 to 0.5 per cent K 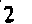 O by weight with respect to TiO 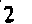 . Potassium compounds which are suitable include potassium hydroxide and potassium chloride but potassium sulphate is a convenient and preferred compound.

The amount of phosphorus compound present during calcination is between 0.2 and 1.0 per cent by weight calculated as P 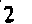 O 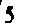 with respect to TiO 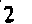 . Preferably, the amount is from 0.4 to 0.6 per cent P 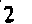 O 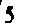 by weight with respect to TiO 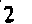 . Phosphorus compounds may be present in the hydrous titanium oxide as a result of the ore used in its preparation and these phosphorus compounds need to be taken into account when calculating the phosphorus present during calcination. When it is necessary to add a phosphorus compound phosphates of alkali metals or ammonium phosphates are suitable phosphorus compounds but the preferred compounds are phosphoric acid and monoammonium phosphate.

Preferably the amount of phosphorus compound present, expressed as weight per cent P₂O₅ with respect to weight of TiO₂ is greater than the amount of potassium compound present, expressed as weight per cent K₂O with respect to weight of TiO₂.

The amount of aluminium compound present during calcination is between 0.1 and 0.5 per cent by weight calculated as Al₂O₃ with respect to TiO₂. Preferably, the amount is from 0.2 to 0.4 per cent Al₂O₃ by weight with respect to TiO₂. Suitable aluminium compounds which may be added to the hydrous titanium oxide include aluminium oxide, aluminium nitrate and aluminium chloride but the preferred compound is aluminium sulphate.

Other compounds may be present during calcination, if desired. However, the addition of any compounds which promote conversion of anatase to rutile should be avoided.

It is essential that the hydrous titanium oxide is calcined under conditions which ensure that it is heated to at least 1000°C. The optimum temperature depends to some extent upon the precise quantities of additives present during calcination. In general terms an increase in final temperature causes an increase in the average crystal size of the product but also accelerates conversion from the anatase crystal form to the rutile crystal form. The final temperature is chosen to optimise the average crystal size without inducing significant rutilisation. Generally, the hydrous titanium oxide is heated to a temperature in the range 1000°C to 1060°C and frequently the temperature is in the range 1020°C to 1060°C.

The product from the calcination is cooled and normally subjected to treatment conventionally used in the titanium dioxide pigment industry. For example, it can be coated with hydrous oxides of elements such as aluminium, silicon, titanium and zirconium. It may also be treated with organic compounds such as polyols, alkanolamines and siloxanes. For example, treatment with trimethylolpropane, pentaerythritol, triethanolamine or dimethylsiloxane may be carried out.

Generally, the products have an average crystal size in the range 0.20 to 0.30 micrometre. The preferred products have an average crystal size in the range 0.24 to 0.30 micrometre and the most preferred products have an average crystal size in the range 0.25 to 0.27 micrometre. The geometric standard deviation of the average crystal size is generally in the range 1.28 to 1.50 and frequently in the range 1.30 to 1.35.

Generally, at least 90% by weight of the product is in the anatase crystal form and preferably at least 95% is in the anatase form.

Uncoated products of this invention are useful in producing fibres, ceramics, paper, paper coatings and cosmetics and as food additives. The coated products are useful for paints, especially emulsion paints and for inks, radiation-cured coatings, rubber, plastics and fibres. Generally the opacity of the products of this invention is improved compared to conventional anatase products that have a smaller average crystal size and the whiteness and brightness of the products is improved over rutile. The products are especially useful when used in conjunction with optical brighteners.

The invention is illustrated by the following examples.

### EXAMPLE 1

A solution of titanium sulphate containing the equivalent of 150 grams per litre TiO₂ was prepared by digesting ilmenite with concentrated sulphuric acid and subsequently dissolving the digestion cake in water. After reduction with iron, clarification by filtration and adjustment to an acid to titanium ratio (expressed as weight ratio of H₂SO₄:TiO₂) of 1.85 and an iron to titanium ratio by weight of 0.5 the solution was heated to a temperature of 90°C and anatase-producing nuclei which had been prepared by hydrolysis of titanium tetrachloride were added over 5 minutes in an amount equivalent to 0.35% TiO₂ by weight with respect to potential TiO₂ in the solution. The solution was heated to boiling and was maintained at boiling until precipitation of hydrous titanium oxide was complete.

The hydrous titanium oxide was separated by filtration, washed by slurrying with water and re-filtered. The filter cake was then re-slurried with dilute sulphuric acid containing trivalent titanium equivalent to 0.1 g Ti₂O₃ per 100g wet filter cake and further washed and the hydrous titanium dioxide was again separated by filtration to produce a dewatered pulp.

Potassium sulphate in amount equivalent to 0.30% by weight K₂O with respect to TiO₂, aluminium sulphate equivalent to 0.30% Al₂O₃ by weight with respect to TiO₂ and sufficient monoammonium phosphate to adjust the phosphorus level in the hydrous titanium oxide to the equivalent of 0.50% P₂O₅ by weight with respect to TiO₂ were added and the hydrous titanium oxide was heated in a rotary laboratory muffle furnace until the product temperature was 1020°C. The titanium dioxide formed was cooled to room temperature and was found to be anatase having an average crystal size of 0.27 micrometre as determined by image analysis (Quantimet 570) of a transmission electron micrograph and a rutile content of 2.0% by weight.

### EXAMPLE 2

Dewatered pulp was prepared as in Example 1 and the same quantities of potassium sulphate, aluminium sulphate and monoammonium phosphate were added. The treated pulp was calcined in a laboratory rotary calciner until the product temperature was 1040°C. The cooled product was anatase titanium dioxide having an average crystal size of 0.35 microns and a rutile content of 3.1% by weight.

### EXAMPLE 3

Dewatered pulp was prepared as in Example 1. Potassium sulphate in an amount equivalent to 0.23% by weight K₂O with respect to TiO₂, aluminium sulphate equivalent to 0.30% by weight with respect to TiO₂ and sufficient monoammonium phosphate to adjust the phosphorus level in the hydrous titanium oxide to the equivalent of 0.50% P₂O₅ with respect to TiO₂ were added and the hydrous titanium oxide was heated in a rotary laboratory muffle furnace until the product temperature was 1030°C. A sample was taken and cooled and found to be anatase having an average crystal size of 0.24 micrometre as determined by image analysis (Quantimet 570) of a transmission electron micrograph and a rutile content of 2.5% by weight.

The bulk of the anatase was further heated to 1040°C and, after cooling, the average crystal size was found to be 0.25 micrometre and the rutile content was 3.8% by weight.

### EXAMPLE 4

A dewatered pulp prepared as in Example 1 was mixed with additives as in Example 3 except that the amount of potassium sulphate used was equivalent to 0.50% K₂O by weight with respect to TiO₂. The hydrous titanium oxide containing these additives was heated in a rotary laboratory muffle furnace to 1020°C and a sample was taken and cooled. This was anatase having an average crystal size of 0.22 micrometre as determined by image analysis (Quantimet 570) of a transmission electron micrograph and a rutile content of 1.6% by weight.

The bulk of the anatase was heated to 1040°C and, after cooling, the average crystal size was found to be 0.35 micrometre and the rutile content was 8.1% by weight.

## Claims

1. A process for the preparation of anatase titanium dioxide comprising precipitating hydrous titanium oxide from an aqueous solution of a titanium sulphate by heating said aqueous solution in the presence of a nuclei suspension, separating the precipitated hydrous titanium oxide from the aqueous solution and subjecting said hydrous titanium oxide to a calcination process characterised in that said nuclei suspension consists of non-rutilising nuclei and is prepared in the substantial absence of aluminium ions, said calcination process is carried out in the presence of at least one potassium compound, at least one phosphorus compound and at least one aluminium compound, the potassium compound being present in an amount equivalent to between 0.1 and 0.7 per cent by weight potassium oxide calculated as K₂O with respect to TiO₂, the phosphorus compound being present in an amount equivalent to between 0.2 and 1.0 per cent by weight phosphorus oxide calculated as P₂O₅ with respect to TiO₂ and the aluminium compound being present in an amount equivalent to between 0.1 and 0.5 per cent by weight alumina calculated as Al₂O₃ with respect to TiO₂ and in which calcination process the hydrous titanium oxide is converted to anatase titanium dioxide by heating to a temperature of at least 1000°C.

2. A process according to claim 1 characterised in that the titanium sulphate solution has a concentration equivalent to between 100 and 250 grams per litre TiO₂.

3. A process according to claim 1 or 2 characterised in that the titanium sulphate solution has a composition such that the ratio of sulphate to titanium calculated as weight of H₂SO₄ to weight of TiO₂ is in the range 1.50 to 2.10.

4. A process according to any one of the preceding claims characterised in that the non-rutilising nuclei are prepared by the addition of an aqueous solution of sodium hydroxide to an aqueous solution of titanium tetrachloride containing the equivalent of from 150 to 250 grams per litre TiO₂ and also containing sulphuric acid at a ratio of TiO₂:H₂SO₄ in the range 1.25:1 to 1.75:1.

5. A process according to any one of the preceding claims characterised in that the non-rutilising nuclei are approximately spherical and have an average particle diameter in the range 2 nm to 8 nm.

6. A process according to any one of the preceding claims characterised in that the amount of non-rutilising nuclei employed is in the range 0.2 to 0.5 per cent by weight calculated as TiO₂ with respect to titanium content of the titanium sulphate solution expressed as TiO₂.

7. A process according to any one of the preceding claims characterised in that a mixture of titanium sulphate solution and non-rutilising nuclei is held at a temperature between 80°C and 110°C to produce hydrous titanium oxide.

8. A process according to claim 7 characterised in that the mixture is held at a temperature between 90°C and 110°C for a period between 200 and 400 minutes.

9. A process according to any one of the preceding claims characterised in that the hydrous titanium oxide after separation from the aqueous solution contains from 2 to 15 per cent by weight free sulphuric acid with respect to weight of TiO₂.

10. A process according to any one of the preceding claims characterised in that the hydrous titanium oxide is fed to a calciner as a damp filter cake containing between 40 and 55 per cent TiO₂ by weight.

11. A process according to any one of the preceding claims characterised in that the amount of potassium compound present during calcination is in the range 0.25 to 0.5 per cent K₂O by weight with respect to TiO₂ in the hydrous titanium oxide.

12. A process according to any one of the preceding claims characterised in that the phosphorus compound is present in an amount in the range 0.4 to 0.6 per cent by weight expressed as P₂O₅ with respect to TiO₂ in the hydrous titanium oxide.

13. A process according to any one of the preceding claims characterised in that the amount of phosphorus compound present expressed as weight per cent P₂O₅ with respect to weight of TiO₂ in the hydrous titanium dioxide is greater than the amount of potassium compound present expressed as weight per cent K₂O with respect to weight of TiO₂.

14. A process according to any one of the preceding claims characterised in that the amount of aluminium compound present is in the range 0.2 to 0.4 per cent Al₂O₃ by weight with respect to TiO₂ in the hydrous titanium oxide.

15. A process according to any one of the preceding claims characterised in that the hydrous titanium oxide is heated to a temperature in the range 1000°C to 1060°C.

16. Anatase titanium dioxide prepared by a process according to any one of the preceding claims characterised in that the average crystal size of the anatase is in the range 0.20 to 0.30 micrometre.

17. Anatase titanium dioxide according to claim 16 characterised in that the geometric standard deviation of average crystal size of the anatase is in the range 1.28 to 1.50.

18. Anatase titanium dioxide according to claim 16 or 17 characterised in that least 90 per cent by weight is in the anatase crystal form.
